Europäisches Patentamt

European Patent Office

Office européen des brevets

(11) Numéro de publication: **0 236 216**
A1

(12) **DEMANDE DE BREVET EUROPEEN**

(21) Numéro de dépôt: **87400382.5**

(22) Date de dépôt: **20.02.87**

(51) Int. Cl.⁴: **B 60 K 11/04,** B 60 H 1/32,
F 01 P 3/18

(30) Priorité: **27.02.86 FR 8602742**

(43) Date de publication de la demande: **09.09.87**
**Bulletin 87/37**

(84) Etats contractants désignés: **DE ES FR IT**

(71) Demandeur: **VALEO, 64, avenue de la Grande Armée,
F-75848 Paris Cédex 17 (FR)**

(72) Inventeur: **Simonin, Michel, 11, rue Jean Monnet,
F-78180 Montigny le Bretonneux (FR)**

(74) Mandataire: **Netter, André et al, Cabinet NETTER 40, rue
Vignon, F-75009 Paris (FR)**

(54) **Agencement d'échangeurs de chaleur à l'avant de la carrosserie d'un véhicule automobile.**

(57) L'invention concerne un agencement de deux échangeurs de chaleur à l'intérieur de la partie avant de la carrosserie d'un véhicule automobile, les deux échangeurs (36, 38) étant montés en oblique l'un au-dessus de l'autre en formant un dièdre à l'intérieur d'une gaine (20) de circulation d'air comprenant deux ouvertures (26, 28) d'entrée d'air à son extrémité avant et un groupe moto-ventilateur (30) à son extrémité aval.

L'invention s'applique notamment à l'agencement d'un radiateur et d'un condenseur dans un véhicule automobile.

EP 0 236 216 A1

ACTORUM AG

1

## Agencement d'échangeurs de chaleur à l'avant de la carrosserie d'un véhicule automobile.

L'invention concerne un agencement d'échangeurs de chaleur à l'avant de la carrosserie d'un véhicule automobile, en particulier d'un radiateur parcouru par le liquide de refroidissement du moteur du véhicule et d'un condenseur qui est parcouru par un fluide de travail et qui fait par exemple partie d'une installation de climatisation ou de conditionnement d'air de l'habitacle du véhicule automobile.

Dans la technique antérieure, on a proposé de disposer ces deux échangeurs de chaleur côte à côte en les juxtaposant horizontalement dans un même plan transversal à l'intérieur du compartiment moteur du véhicule, en avant du groupe moto-propulseur. Toutefois, cette disposition se révèle très encombrante et n'est possible que si le compartiment moteur du véhicule a une très grande largeur transversale. En outre, les échangeurs de chaleur se trouvent alors disposés immédiatement en aval du pare-choc du véhicule et ne sont pas correctement alimentés en air extérieur.

On a également proposé de placer ces deux échangeurs l'un derrière l'autre, le condenseur étant en général placé devant le radiateur par rapport au sens de circulation de l'air extérieur. On réduit ainsi l'encombrement en largeur des échangeurs, mais cette réduction de l'encombrement s'obtient au détriment du rendement des échangeurs car, d'une part, l'air qui traverse le radiateur a déjà traversé le condenseur et s'est réchauffé et, d'autre part, la présence du radiateur derrière le condenseur augmente les pertes de charge de l'écoulement d'air, ce qui (dans le cas où les échangeurs de chaleur comprennent un faisceau de tubes à ailettes) impose d'avoir une distance relativement importante entre les ailettes et augmente donc la dimension des échangeurs de chaleur. Par ailleurs, ces deux échangeurs de chaleur se trouvent encore placés immédiatement en aval du pare-choc et ne peuvent donc être alimentés correctement en air extérieur, ce qui oblige à les surdimensionner pour avoir un rendement thermique suffisant.

L'invention a pour but d'éviter tous ces inconvénients rencontrés dans la technique antérieure grâce à un agencement particulier des échangeurs de chaleur à l'avant de la carrosserie du véhicule automobile.

Elle propose donc à cet effet un agencement d'échangeurs de chaleur à l'avant de la carrosserie d'un véhicule automobile, en particulier d'un radiateur parcouru par le liquide de refroidissement du moteur du véhicule et d'un condenseur parcouru par un fluide de travail, caractérisé en ce que les deux échangeurs sont disposés l'un au-dessus de l'autre en oblique dans une seule gaine de circulation d'air dont une extrémité comprend deux ouvertures de passage d'air associées chacune à l'un des échangeurs de chaleur, et en ce que cette gaine contient également des moyens de mise en vitesse de l'air, comprenant au moins un groupe moto-ventilateur.

On obtient ainsi une diminution de l'encombrement des échangeurs à l'avant de la carrosserie du véhicule et, simultanément, une alimentation correcte de ces échangeurs en air extérieur, malgré la présence du pare-choc à l'avant de la carrosserie.

Par ailleurs, grâce à cette disposition, les moyens de mise en vitesse de l'air peuvent être suffisamment éloignés des échangeurs de chaleur, ce qui favorise l'uniformité de l'écoulement d'air à travers les échangeurs.

Selon une autre caractéristique de l'invention, des moyens d'obturation sont montés mobiles dans ladite gaine entre une première position où ils n'ont sensiblement aucun effet sur le passage de l'air à travers lesdits échangeurs et une deuxième position où ils interdisent le passage de l'air à travers l'un et/ou l'autre des échangeurs.

On peut ainsi dissocier le fonctionnement des échangeurs de chaleur et, par exemple, favoriser le fonctionnement du radiateur du circuit de refroidissement du moteur du véhicule lorsque ce moteur fonctionne à pleine charge, et favoriser le fonctionnement du condenseur lorsque le moteur tourne au ralenti.

Selon une première forme de réalisation de l'invention, les moyens d'obturation sont communs aux deux échangeurs et sont mobiles entre leur première position où ils n'ont pas d'effet sur le passage de l'air à travers les échangeurs, une deuxième position où ils interdisent le passage de l'air à travers l'un des échangeurs, et une troisième position où ils interdisent le passage de l'air à travers l'autre échangeur.

Selon une variante de réalisation de l'invention, des moyens d'obturation indépendants sont associés à chaque échangeur de chaleur.

De plus, lorsque ces moyens d'obturation se trouvent dans leur première position où ils n'ont sensiblement pas d'effet sur le passage de l'air à travers les échangeurs, ils sont disposés immédiatement en aval du pare-choc avant du véhicule.

Selon les cas, les moyens d'obturation peuvent être placés en amont, ou en aval respectivement, des échangeurs dans ladite gaine, et les moyens de mise en vitesse de l'air sont alors disposés en aval, ou en amont respectivement, des échangeurs de chaleur.

On peut également prévoir dans ladite gaine un groupe moto-ventilateur unique, ou bien deux groupes moto-ventilateurs indépendants, associés chacun à un échangeur de chaleur.

Les moyens d'obturation peuvent être des volets mobiles, qui sont guidés à rotation ou à coulissement dans ladite gaine, ou bien ils peuvent comprendre des lames orientables montées à rotation autour d'axes transversaux dans un cadre fixé à l'intérieur de ladite gaine.

Dans tous les cas, cet agencement des échangeurs de chaleur permet de diminuer la dimension de chaque échangeur de chaleur, d'augmenter leur rendement thermique et de diminuer l'encombrement total de leur agencement à l'avant de la carrosserie du véhicule.

Dans la description qui suit, faite à titre d'exemple, on se réfère aux dessins annexés, dans lesquels :

- la figure 1 est une vue schématique en coupe verticale de la partie avant de la carrosserie d'un véhicule automobile, représentant une première forme de réalisation de l'invention;

- les figures 2, 3 et 4 sont des vues semblables à la figure 1, mais représentent des variantes de réalisation de l'invention;

- la figure 5 est une vue schématique en coupe verticale de la partie avant de la carrosserie d'un véhicule, comprenant une autre variante de réalisation de l'invention.

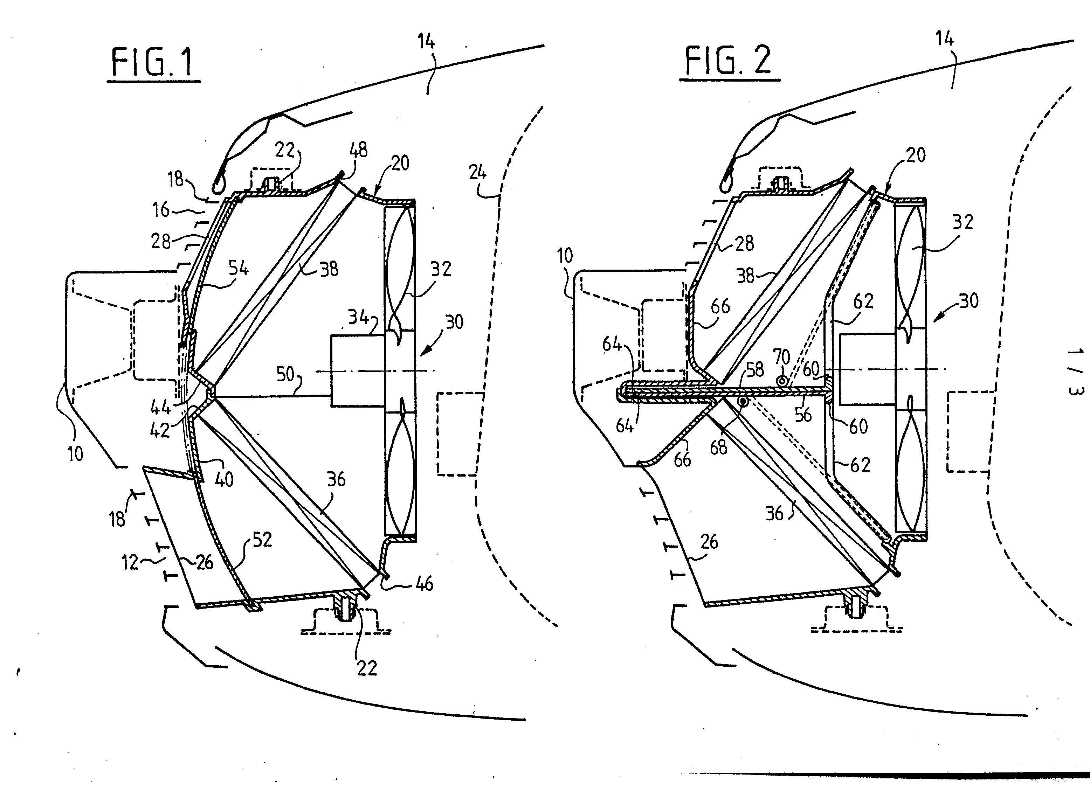

On se réfère d'abord à la figure 1, qui représente schématiquement en coupe verticale la partie avant de la carrosserie d'un véhicule automobile, à l'intérieur de laquelle sont agencés deux échangeurs de chaleur conformément à l'invention.

L'extrémité avant de la carrosserie comprend un pare-choc avant 10 sensiblement horizontal, qui est fixé sur la carrosserie au-dessus d'une ouverture inférieure 12 d'entrée d'air dans le compartiment moteur 14 formé à l'avant de la carrosserie du véhicule, et en dessous d'une ouverture supérieure 16 d'entrée d'air dans ce compartiment moteur. Les deux entrées d'air 12 et 16 sont munies, de façon classique, de grilles ou analogues 18, ayant un aspect décoratif et empêchant l'entrée de gros objets dans le compartiment moteur 14 du véhicule.

Une gaine 20 de circulation d'air est fixée par des moyens appropriés tels que ceux représentés en 22 à l'intérieur du compartiment 14, entre l'extrémité avant de la carrosserie et le groupe moto-propulseur 24 logé dans le compartiment moteur du véhicule. L'extrémité amont de la gaine 20 comprend deux ouvertures 26 et 28 d'entrée d'air, qui s'étendent en regard des ouvertures 12 et 16 respectivement, immédiatement en aval des grilles 18, et son extrémité aval forme une ouverture sensiblement cylindrique à l'intérieur de laquelle sont montés des moyens de mise en vitesse de l'air à l'intérieur de la gaine 20, qui sont ici constitués par un groupe moto-ventilateur 30 comprenant un ventilateur 32 et son moteur électrique 34 d'entraînement.

A l'intérieur de la gaine 20 sont disposés deux échangeurs de chaleur 36 et 38 qui se trouvent l'un au-dessus de l'autre et qui s'étendent en oblique dans la gaine 20 de façon à former entre eux un dièdre dont le sommet est orienté vers l'avant du véhicule et se trouve immédiatement en aval du pare-choc avant 10. Plus précisément, l'extrémité amont de la gaine 20 comprend, entre les deux ouvertures 26 et 28, une paroi 40 pliée de façon à présenter deux surfaces 42 et 44 formant des surfaces d'appui du bord horizontal supérieur de l'échangeur 36 et du bord horizontal inférieur de l'échangeur 38, respectivement, les bords horizontaux opposés des échangeurs 36 et 38 étant reçus et maintenus dans des découpes ou des fentes 46 et 48 respectivement de la gaine 20.

Comme on le voit en figure 1, la gaine 20 peut être réalisée en deux parties, qui sont juxtaposées et assemblées l'une à l'autre suivant un plan de joint sensiblement horizontal 50. La paroi amont 40 de la gaine 20 forme également guidage de moyens d'obturation qui peuvent être constitués par un volet unique 52, mobile entre une première position où il se trouve immédiatement en aval du pare--choc 10 et n'a aucun effet sur la circulation de l'air à travers les échangeurs 36 et 38, une deuxième position, représentée en trait plein en figure 1, où il obture l'ouverture inférieure 26 de la gaine 20, et une troisième position où il obture l'ouverture supérieure 28 de cette gaine.

En variante, on peut prévoir deux de ces volets dont l'un servira à obturer l'ouverture inférieure 26 de la gaine 20, comme le volet 52 et dont l'autre servira à obturer l'ouverture supérieure 28 de cette gaine, comme le volet 54 représenté en trait plein en figure 1. Dans ce cas, les deux volets sont manoeuvrables indépendamment l'un de l'autre et sont déplaçables entre leur position d'obturation de l'ouverture correspondante 26 ou 28, et leur position de repos où ils se trouvent immédiatement en aval du pare-choc avant 10. Pour leur guidage, et comme représenté en figure 1, les bords des volets peuvent être reçus dans des rainures de la paroi interne de la gaine 20.

Cet agencement d'échangeurs de chaleur est utilisé de la façon suivante :

Dans l'exemple représenté, l'échangeur inférieur 36 est le radiateur du circuit de refroidissement du moteur à combustion interne du véhicule, tandis que l'échangeur supérieur 38 est un condenseur faisant partie d'une boucle de circulation d'un fluide de travail comprenant par exemple un compresseur et un évaporateur, utilisés dans une installation de climatisation ou de conditionnement d'air de l'habitacle du véhicule.

L'air aspiré dans la gaine 20 par la rotation du ventilateur 32 pénètre dans cette gaine par les ouvertures 26 et 28 lorsque celles-ci ne sont pas obturées par le ou les volets 52 et 54, traverse les échangeurs 36 et 38 et sort de la gaine par l'extrémité aval de celle-ci. Cette extrémité aval se trouve à une certaine distance du groupe moto-propulseur 24, de sorte que la sortie de l'air par cette extrémité aval de la gaine n'est pas contrariée par la présence du groupe moto-propulseur. Par ailleurs, le groupe moto-ventilateur 30 se trouve lui-même à une certaine distance des échangeurs 36 et 38, ce qui favorise l'uniformité de l'écoulement de l'air à travers les échangeurs. Si l'on souhaite favoriser le fonctionnement d'un des échangeurs de chaleur dans certaines conditions, on peut, par exemple lorsque le moteur du véhicule tourne au ralenti, obturer plus ou moins l'ouverture inférieure 26 de la gaine 20 par le volet 52. Dans ce cas, la puissance d'aspiration développée par le groupe moto-ventilateur 30 s'exerce essentiellement sur le condenseur 38 qui est traversé par un plus grand débit d'air aspiré dans la gaine 20 par l'ouverture supérieure 28. Inversement, pour la pleine charge du moteur du véhicule, on peut obturer l'ouverture supérieure 28 de la gaine 20 et faire traverser le radiateur 36 par un plus grand débit d'air.

Par ailleurs, la bonne circulation de l'air à travers les échangeurs 36 et 38 permet, lorsque ces derniers comprennent des faisceaux de tubes à ailettes, de diminuer le pas entre ailettes et donc de réduire la hauteur de
ces échangeurs, ce qui permet par voie de conséquence
de diminuer leur encombrement et leur coût.

On se réfère maintenant de la figure 2, représentant une
variante de réalisation de l'invention, différant essentiellement de la forme de réalisation de la figure 1 par
la structure des moyens d'obturation.

Dans la variante de réalisation de la figure 2, ces moyens
d'obturation sont constitués par deux volets indépendants,
associés chacun à un échangeur de chaleur 36, 38 respectivement, et qui sont disposés en aval des échangeurs dans
la gaine 20 par rapport au sens de circulation de l'air.
Chaque volet 56, 58 comprend un bord horizontal arrière
60 dont les extrémités sont guidées à coulissement dans
des glissières 62 de la gaine 20, et un bord horizontal
avant 64 reçu dans une cavité plane horizontale formée
par la paroi amont 66 de la gaine 20 qui s'étend vers
l'avant jusqu'à l'intérieur du pare-choc avant 10. Les
volets 56, 58 sont réalisés en matière souple ou élastiquement déformable et sont guidés sur les cylindres d'appui 68 et 70 respectivement. Chaque volet 56, 58 est ainsi mobile entre une première position (représentée en
trait plein) où il s'étend horizontalement entre les deux
échangeurs 36 et 38 et n'a aucun effet sur la circulation
de l'air à travers l'échangeur auquel il est associé,
et une deuxième position (représentée en tirets) où le
volet s'étend le long de la face aval de l'échangeur associé 36 ou 38, entre celui-ci et le groupe moto-ventilateur 30, pour empêcher la circulation de l'air à travers
l'échangeur de chaleur.

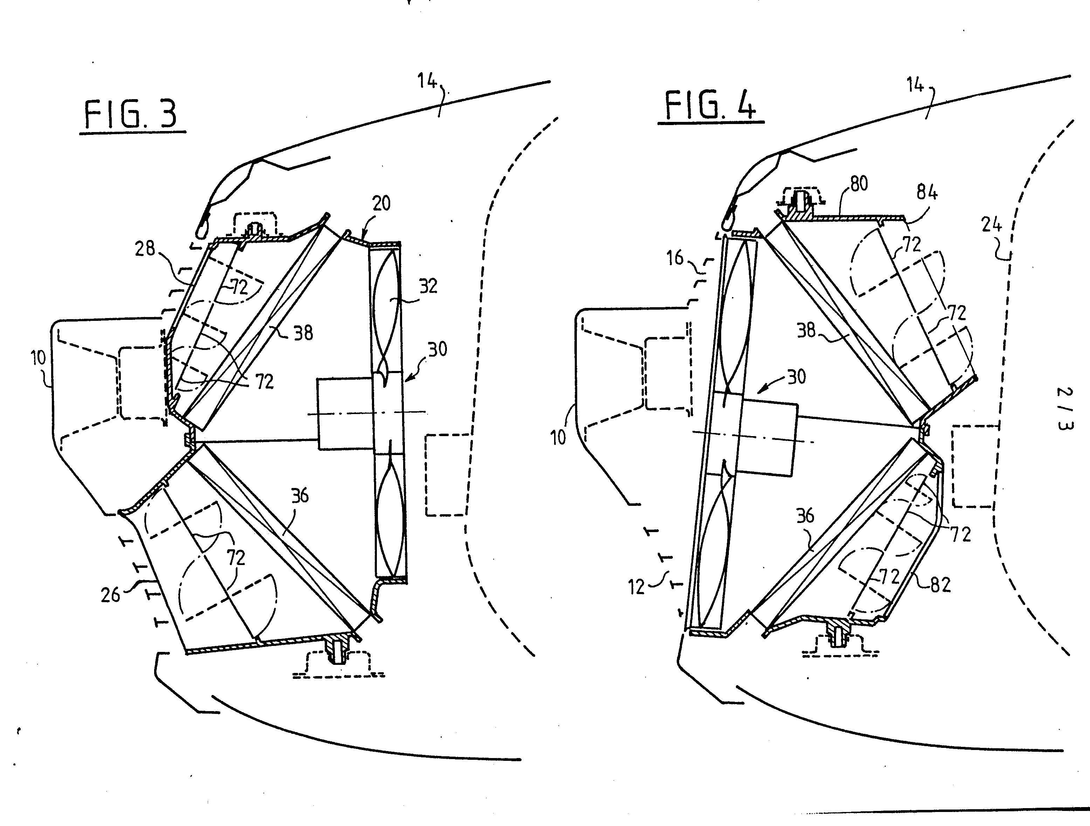

On se réfère maintenant à la figure 3 représentant une
autre variante de réalisation de l'invention, dans laquelle les moyens d'obturation sont prévus en amont des échangeurs de chaleur 36 et 38 pour obturer les ouvertures
26 et 28 respectivement d'entrée d'air dans la gaine 20.

Ces moyens d'obturation sont constitués par des volets comprenant des lames orientables 72 montées à rotation autour d'axes transversaux entre une première position (représentée en trait plein) où elles sont alignées les unes avec les autres et obturent l'ouverture correspondante 26 ou 28, et une seconde position (représentée en trait mixte) où elles sont sensiblement parallèles et permettent le passage d'un débit maximum d'air à travers l'échangeur de chaleur correspondant 36 ou 38. De façon classique, les axes de rotation des lames 72 sont portés par un cadre, non représenté, fixé à l'intérieur de la gaine 20.

On se réfère maintenant à la figure 4, représentant une variante de réalisation de l'invention, qui diffère de celle de la figure 3 par inversion de ses composants essentiels.

Dans ce cas, les échangeurs de chaleur 36 et 38 forment entre eux un dièdre dont le sommet est orienté vers l'arrière du véhicule et sont montés à l'intérieur d'une gaine 80 de circulation d'air à l'extrémité amont de laquelle est monté le groupe moto-ventilateur 30 et dont l'extrémité aval comprend deux ouvertures 82 et 84 de sortie d'air, qui débouchent dans le compartiment moteur du véhicule à distance du groupe moto-propulseur 24. Des moyens d'obturation de ces ouvertures sont prévus et sont constitués par des volets à lames orientables 72 montés entre les échangeurs de chaleur 36 et 38 et l'ouverture de sortie d'air correspondante 82, 84. Dans cette variante de réalisation, le groupe moto-ventilateur 30 se trouve immédiatement en aval du pare-choc avant 10 et les pales du ventilateur 32 tournent en regard des ouvertures d'entrée d'air 12 et 16 de l'extrémité avant de la carrosserie du véhicule.

Dans cette variante de réalisation, lorsque l'une des ouvertures de sortie 82, 84 est obturée par le volet correspondant, tout l'air soufflé par le ventilateur 32 passe

0236216

nécessairement à travers l'échangeur de chaleur 36 ou 38 disposé en regard de l'autre ouverture de sortie d'air de la gaine 80.

Dans les formes de réalisation représentées dans les figures 1 à 4, les moyens d'obturation permettent de régler à volonté la valeur du débit d'air passant à travers un échangeur de chaleur. On peut également prévoir, si on le souhaite pour simplifier les commandes, que les moyens d'obturation pourront, soit interdire le passage de l'air à travers un échangeur de chaleur, soit permettre la traversée de cet échangeur par un débit d'air maximum, sans pouvoir occuper de position intermédiaire.

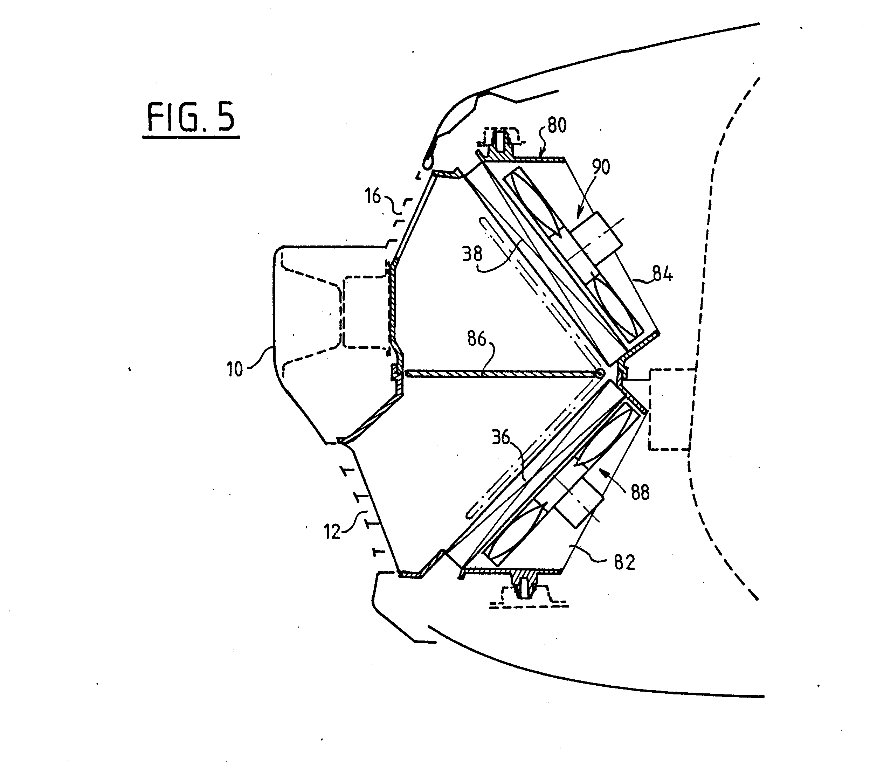

On se réfère maintenant à la figure 5, représentant une autre forme de réalisation de l'invention.

Dans cette forme de réalisation, les échangeurs de chaleur 36 et 38 sont montés dans une gaine de circulation d'air qui est semblable à la gaine 80 de la figure 4, en formant dans cette gaine un dièdre dont le sommet est orienté vers l'arrière du véhicule. Un volet 86 est monté pivotant à l'intérieur de cette gaine, en amont des échangeurs 36 et 38, en étant articulé à son extrémité arrière autour d'un axe transversal au voisinage du sommet du dièdre formé par les échangeurs 36 et 38, ce volet 86 étant déplaçable entre une première position où il est aligné avec le pare-choc avant 10 et n'a aucun effet sur la circulation de l'air à travers les échangeurs 36 et 38, une deuxième position où il s'étend le long de l'échangeur 36 et interdit le passage de l'air à travers cet échangeur, et une troisième position où il s'étend le long de l'échangeur 38 et interdit le passage de l'air à travers cet échangeur. Deux groupes moto-ventilateurs 88 et 90 sont montés dans les ouvertures 82 et 84 de sortie d'air de la gaine 80, en aval des échangeurs 36 et 38 respectivement et sont commandés indépendamment l'un de l'autre en fonction du régime de fonctionnement du moteur du véhicule.

Dans la forme de réalisation de la figure 5, le volet 86 pourrait être supprimé.

Revendications.

1. Agencement d'échangeurs de chaleur à l'avant de la carrosserie d'un véhicule automobile, en particulier d'un radiateur (36) parcouru par le liquide de refroidissement du moteur du véhicule et d'un condenseur (38) parcouru par un fluide de travail, caractérisé en ce que les deux échangeurs (36, 38) sont disposés l'un au-dessus de l'autre en oblique dans une seule gaine (20, 80) de circulation d'air dont une extrémité comprend deux ouvertures (12, 16) de passage d'air associées chacune à l'un des échangeurs de chaleur, et en ce que cette gaine contient également des moyens (30, 88, 90) de mise en vitesse de l'air, comprenant au moins un groupe moto-ventilateur.

2. Agencement selon la revendication 1, caractérisé en ce que les échangeurs de chaleur (36, 38) forment un dièdre dont le sommet est dirigé soit vers l'avant, soit vers l'arrière du véhicule.

3. Agencement selon la revendication 1 ou 2, caractérisé en ce que des moyens d'obturation (52, 54, 56, 58, 72, 86) sont montés mobiles dans ladite gaine entre une première position où ils n'ont sensiblement aucun effet sur le passage de l'air à travers lesdits échangeurs et une deuxième position où ils interdisent le passage de l'air à travers l'un et/ou l'autre des échangeurs.

4. Agencement selon la revendication 3, caractérisé en ce que lesdits moyens d'obturation (52, 86) sont communs aux deux échangeurs (36, 38) et sont mobiles entre leur première position où ils n'ont pas d'effet sur le passage de l'air à travers les échangeurs, une deuxième position où ils interdisent le passage de l'air à travers l'un des échangeurs, et une troisième position où ils interdisent le passage de l'air à travers l'autre échangeur.

5. Agencement selon la revendication 3, caractérisé en ce qu'il comprend des moyens d'obturation indépendants pour chaque échangeur de chaleur (36, 38).

6. Agencement selon l'une des revendications 3 à 5, caractérisé en ce que, dans leur première position où ils n'ont pas d'effet sur le passage de l'air à travers les échangeurs, lesdits moyens d'obturation sont situés immédiatement en aval du pare-choc avant (10).

7. Agencement selon l'une des revendications 3 à 6, caractérisé en ce que lesdits moyens d'obturation (52, 54, 72, 86) sont en amont des échangeurs de chaleur (36, 38) dans ladite gaine (20, 80).

8. Agencement selon l'une des revendications 1 à 7, caractérisé en ce que lesdits moyens (30) de mise en vitesse de l'air sont en aval des échangeurs de chaleur (36, 38).

9. Agencement selon l'une des revendications 3 à 6, caractérisé en ce que lesdits moyens d'obturation (56, 58, 72) sont en aval des échangeurs de chaleur (36, 38).

10. Agencement selon l'une des revendications 1 à 6 et 9, caractérisé en ce que lesdits moyens (30) de mise en vitesse de l'air sont en amont des échangeurs.

11. Agencement selon l'une des revendications 3 à 10, caractérisé en ce que les moyens d'obturation sont des volets mobiles (52, 54, 56, 58, 86) montés à rotation ou à coulissement dans ladite gaine (20, 80).

12. Agencement selon l'une des revendications 3 à 10, caractérisé en ce que les moyens d'obturation comprennent des lames orientables (72) montées à rotation autour d'axes transversaux dans un cadre fixé à l'intérieur de ladite gaine (20, 80).

13. Agencement selon l'une des revendications 1 à 10, caractérisé en ce que les moyens de mise en vitesse de

0236216

l'air comprennent deux groupes moto-ventilateurs (88, 90) associés chacun à un échangeur de chaleur (36, 38).

FIG.1

FIG.2

1/3

0236216

FIG. 4

FIG. 3

FIG. 5

0236216

# RAPPORT DE RECHERCHE EUROPEENNE

0236216

Numéro de la demande

EP 87 40 0382

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | FR-A-2 553 826 (PORSCHE) <br> * Revendications; figures 1,2 * | 1 | B 60 K 11/04 <br> B 60 H 1/32 <br> F 01 P 3/18 |
| A | US-A-3 606 762 (ANGLIN) <br> * En entier * | 1 | |
| A | DE-A-1 950 316 (ANGLIN) <br> * En entier * | 1 | |
| A | US-A-2 078 067 (DUESENBERG) | | |
| A | DE-A-3 236 949 (DAIMLER-BENZ) | | |
| A | DE-A-2 722 089 <br> (STEYR-DAIMLER-PUCH) | | |
| A | US-A-3 995 603 (THIEN) | | |

--- 

DOMAINES TECHNIQUES RECHERCHES (Int. Cl.4)

B 60 K
B 60 H
F 01 P

Le présent rapport de recherche a été établi pour toutes les revendications

| Lieu de la recherche | Date d'achèvement de la recherche | Examinateur |
|---|---|---|
| LA HAYE | 03-06-1987 | PIRIOU J.C. |